# EUROPEAN PATENT APPLICATION

(11) **EP 2 540 193 A1**
(43) Date of publication of application: **02.01.2013**
(21) Application number: 12164566.7
(22) Date of filing: 18.04.2012
(51) Int. Cl.: A47B 95/04, F16B 12/26

(54) **A jointing device in particular for furniture elements components**

(30) Priority: 29.06.2011 IT MI20111192; 21.12.2011 IT MI20112344
(71) Applicant: ESSEA S.a.s. di Spinelli Antonio, 23893 Cassago Brianza (Lecco) (IT)
(72) Inventor: Spinelli, Antonio, 20837 Veduggio con Colzano (Monza Brianza) (IT)
(74) Representative: Lunati & Mazzoni S.r.L.

(57) **Abstract**

It is provided a jointing device (1) adapted to mutually connect a first component (11) having a seat (11 b) to a second component (12); this jointing device (1) comprises a first fastening body (20) adapted to be at least partly inserted in the seat (11 b) thus defining an insertion direction (20b), having an outer side surface (20c) adapted to face the seat (11 b) and comprising tongues (22) protruding from the outer side surface (20c) and defining an expansion vector (22a) having a component opposite to the insertion direction (20b); a second fastening body (30) adapted to be connected to the second component (12); and wherein one of the fastening bodies (20, 30) has a housing cavity (21) while the other comprises an insert (31) adapted to be fitted in the housing cavity (21) and to elastically deform the housing cavity (21) so that the fastening bodies (20, 30) and therefore the components (11, 12) are mutually constrained.

## Description

The present invention relates to a jointing device of the type pointed out in the preamble of the first claim.

In particular the invention relates to a device enabling two or more components to be connected to each other in order to form a furniture element such as a bookshelf, a shelf, a desk or other pieces of furniture.

It is known that furniture is produced by first forming the components and then assembling these components, using screws, nails, glues or other similar jointing devices.

These jointing devices however are characterised by the fact that particular and complicated operations are required, which operations in most cases are almost impossible for a worker that is not particularly skilled.

A significant example of these jointing devices is represented by the devices used for securing a handle to those drawers or doors that, being devoid of lock, are moved by only applying a pulling force to the handle.

In these cases the handle, usually made of metal material, is secured to the drawer/door by different jointing devices depending on the site where the device is located. In particular, in case of fastening close to a side edge, engagement of the handle to the rest of the furniture element is carried out by means of glues, while in case of fastening to the outer surface of the door, the engagement is carried out by means of screws.

In detail, in the first case, arrangement of the handle takes place as follows: a protruding portion is provided on the handle, on the opposite side relative to the handgrip, a slot is formed that is adapted to receive the handle's protruding portion, the slot is almost fully filled with glue and the protruding portion is buried in the glue so that the handle is firmly fastened to the rest of the furniture element.

In the second case, positioning of the handle takes place by means of screws that sometimes, in order to give the device greater aesthetic value, are such disposed that they have the head flush with the surface of the furniture element.

The known art mentioned above has some important drawbacks.

A first important problem concerns the fastening between the different components of a furniture element that is particularly complicated and long. Specifically, a particular care and attention is required when joining the components in order to avoid positioning errors and therefore unaesthetical results or malfunction of the furniture element.

This problem is particularly important in case of fastening by glue where, due to the volume and thickness of the glue, it is necessary to wait for the glue hardening and, in addition, there is a great risk of misalignment between the components.

Another important problem due to use of glue is represented by the high packaging costs and, as a result, transport costs, due to the sizes of the package and the care required when handling it. In fact, since fastening is time-consuming and complicated, the gluing operations are to be performed inside the factory so that the furniture element ready for transport has the jointing device already fixed thereto and therefore has bigger sizes.

A further problem concerning use of glues for the fastening is represented by the inseparability of the connection thus made: in case of breaking or replacement of any component, the whole defined furniture element has to be replaced, i.e. the assembly defined by the connected components.

A further important problem also resulting from use of glues is represented by the weak resistance of the connection thus made. In fact, use of glues is limited to the handles disposed on the edges and not to those fastened to the outer surface where the connection will quickly incur breaking and separation as the handles would be submitted to tensile and not shearing stresses.

Important defects are also found in case of use of screws and/or nails.

The main problem is the unaesthetical aspect of the screw head and often projection of the screw head leads to technical drawbacks when the furniture element has to be closed.

Another problem resulting from use of screws is due to the fact that the device must be of high thickness as it has to come into engagement with the screw thread, the aesthetic value of the jointing device being in this case reduced. Under this situation the technical task underlying the present invention is to conceive a jointing device capable of substantially obviating the mentioned drawbacks.

Within the scope of this technical task it is an important aim of the invention to conceive a device enabling furniture of high aesthetic quality to be produced. Another important aim of the invention is to make a jointing device of easy use. The technical task and the aims specified are achieved by a jointing device in particular for components of a furniture element as claimed in the appended Claim 1.

Preferred embodiments are highlighted in the sub-claims.

The features and advantages of the invention are hereinafter clarified by the detailed description of a preferred embodiment of the invention, with reference to the accompanying drawings, in which:
**Fig. 1** shows a jointing device according to the invention;
**Fig. 2a** shows an application of the jointing device;
**Fig. 2b** is an exploded view of Fig. 2a;
**Fig. 2c** is an enlarged view of Fig. 2b;
**Fig. 3a** is a further example of a possible application of the jointing device according to the invention;
**Fig. 3b** is an exploded view of Fig. 3a;
**Fig. 4a** shows another jointing device according to the invention;
**Fig. 4b** is another jointing device according to the invention; and
**Fig. 5** shows a further jointing device according to the invention.

With reference to the drawings, the jointing device according to the invention is generally denoted at **1.**

It is adapted to be used for firmly connecting or securing a first component **11** and a second component **12** to each other in order to create a more complicated assembly and, in particular a furniture element **10.** In detail, the jointing device 1 enables a furniture element 10 to be made by joining components 11 and 12 together in such a manner that these components 11 and 12, being respectively characterised by a first contact surface **11a** and a second contact surface **12b** suitably conforming in shape to the first one, may come into mutual contact defining a constraint plane **10a.**

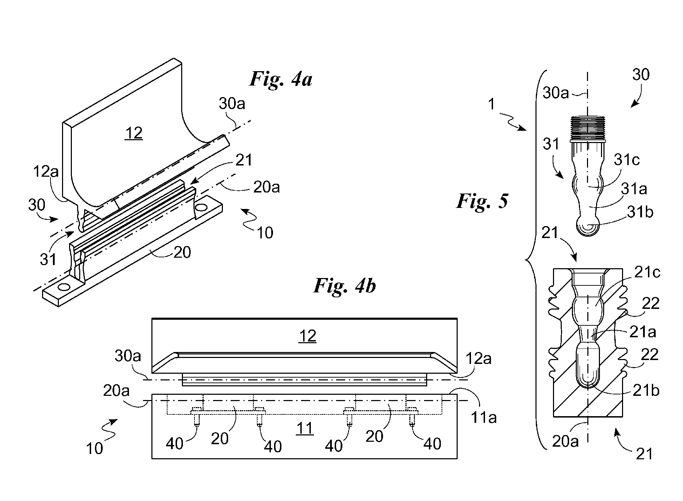

In particular, the jointing device 1 is adapted to be used for joining the different components constituting a piece of furniture such as a wardrobe, a chest of drawers or the like, for example. More particularly, as shown in Figs. 4a-4b, it is adapted to be used for joining a handle, that can be identified as the second component 12, to a door, a drawer, a wing or also solid door/window frames, identifiable as the first component 11, so as to enable a user to move the door or window/door frame by applying a pulling force to the handle that is substantially parallel to the drawing direction of the drawer or the opening direction of the door/window frame.

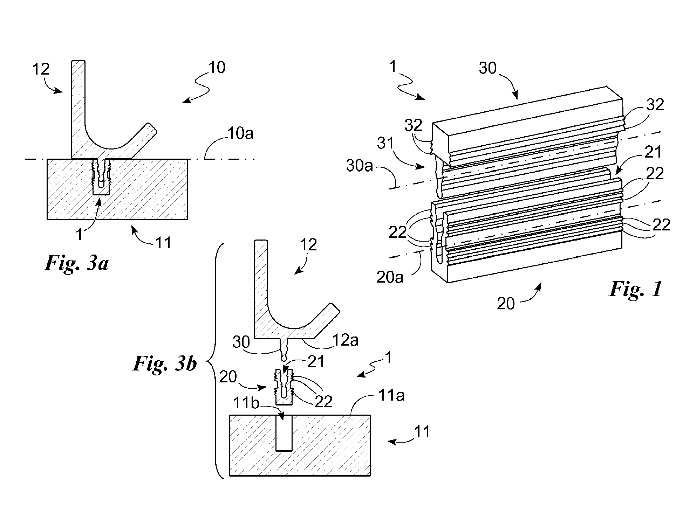

The jointing device 1, as shown in Fig. 1, comprises at least two fastening bodies, i.e. at least one first fastening body **20,** preferably one, adapted to be secured to the first component 11, and at least one second fastening body **30,** preferably one, adapted to be secured to the second component 12 and ìto the first fastening body 20. In particular, the jointing device 1 has a first fastening body 20 and a second fastening body 30 (Figs. 1-4a and 5) or, alternatively, a single second fastening body 30 suitable for engagement with two first bodies 20 (Fig. 4b).

In particular, the first fastening body 20 and second fastening body 30 can be identified as two cylindrical elements (Fig. 5) respectively defining a major extension direction **20a** and a preferred extension direction **30a** substantially perpendicular to the constraint plane 10a and preferably, once the two fastening bodies 20 and 30 are mutually assembled, said directions are substantially coincident.

Alternatively, the first fastening body 20 and second fastening body 30 substantially are bodies having the shape of a parallelepiped and respectively have major extension direction 20a and preferred extension direction 30a substantially parallel to the constraint plane 10a (Figs. 1-4b) so that directions 20a and 30a are substantially parallel to each other when the fastening bodies 20 and 30 are mutually assembled.

The first fastening body 20 and second fastening body 30 are adapted to be mutually connected by friction fit, preferably by interference fit and still more preferably by elastic deformation. Therefore, the first fastening body 20 and second fastening body 30 respectively comprise a housing cavity **21** and an insert **31** adapted to be inserted into cavity 21 and to elastically deform said cavity 21 so that the two fastening bodies 20 and 30 and therefore the two components 11 and 12 are mutually constrained.

The housing cavity 21 further has a section provided with a first narrowing portion **21a** adapted to clamp and define two engagement sites **21b** of greater sizes than the first narrowing portion 21a, so that the housing cavity 21 is characterised by a substantially "8"-shaped conformation, as shown in Figs. 1, 2b and 3b.

In addition, in the same manner as cavity 21, the insert 31 has a shape characterised by the presence of a second narrowing portion **31a** adapted to define two extended portions larger than the second narrowing portion so that insert 31 too has a section of a substantially "8"-shaped conformation.

In particular, the second narrowing portion 31a identifies a tip portion **31b**, placed to a greater distance relative to the constraint plane 10a, and a base portion **31c,** placed to a smaller distance relative to the constraint plane 10a. Preferably, the tip portion 31b has a section of smaller sizes than the base portion 31c. Still more preferably, the tip portion 31b has greater sizes than the engagement sites 21b, but smaller sizes than those of the base portion 31c.

Finally, the narrowing portions 21a and 31a are advantageously characterised by lengths different from each other, which means that they have sizes, calculated along the normal to the constraint plane 10a different from each other. In detail, the second narrowing portion 31a has smaller length than the first narrowing portion 21a and, in greater detail, the second narrowing portion 31a, as compared with the first narrowing portion 21a, has smaller length by an amount included between 0.5 and 0.1 mm.

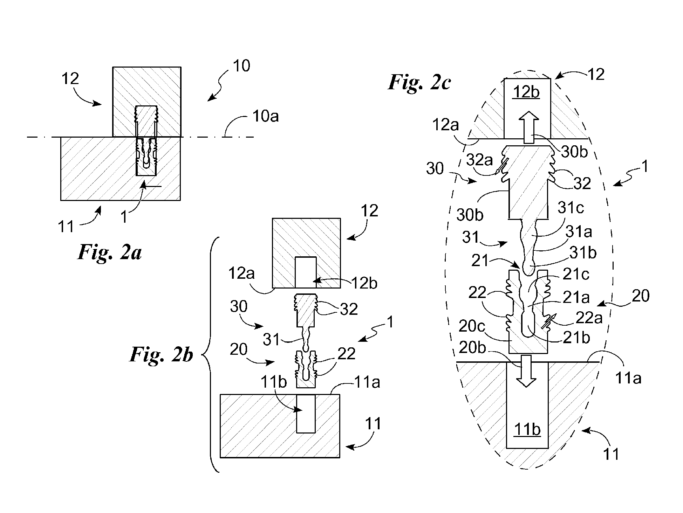

To ensure correct positioning of the first fastening body 20, the first component 11 is provided with a seat **11b** inside which the first fastening body 20 is at least partly inserted defining an insertion direction 20b and secured thereto by a friction fit originally based on a ratchet system. Preferably, as shown in Figs. 2a, 3a and 4b, the first fastening body 20 is such shaped that it is fully inserted inside the seat 11b of the first component 11.

In order to create such friction fit, the first fastening body 20, when it has a substantially cylindrical shape, is provided, at the outer side surface 20c thereof, i.e. the outer surface facing seat 11b and almost opposite to the housing cavity 21, with a thread, preferably a thread M4, suitable for engagement with the seat 11b.

Alternatively, preferably when the major extension direction 20a is substantially parallel to the constraint plane 10a, the first fastening body 20 has tongues 22 suitable for engagement with the seat 11b and disposed on the outer side surface 20c.

In particular, in the last-mentioned case, the first fastening body 20 is provided with tongues 22 on the outer surface 20c at least at one of the engagement sites 21b and, more particularly, at both the engagement sites 21b (Figs. 2a-2c). Tongues 22 substantially extend along the major extension direction 20a so as to ensure optimal distribution of outer forces tending to separate components 11 and 12 and therefore substantially perpendicular to said direction 20a.

They protrude from the side surface 20c defining an expansion vector **22a** which is defined by the length of tongues 22, by the extension direction and the way along which the tongues 22 protrude or jut out of the outer side surface 20c. In detail, in order to create a friction fit of the ratchet type with the seat 11b, they protrude from the outer surface 20c defining an expansion vector 22a characterised by a component opposite to the insertion direction 20b, as highlighted in the enlarged view in Fig. 2c.

In addition, each tongue 22 is advantageously characterised by a tapering section, i.e. a section that, on moving in the direction of the expansion vector 22a, gradually reduces its extension so as to exhibit an appropriate elasticity and at the same time sufficient resistance.

Finally, in order to ensure the correct positioning of the second fastening body 30 relative to the second component 12 and therefore correct assembly of components 11 and 12, the second component has an additional seat **12b** inside which the second fastening body 30 is at least partly inserted thus defining a secondary insertion direction **30b.** Preferably, as shown in Figs. 2a and 3a, the second fastening body 30 is such shaped that it is fully inserted into the additional seat 12b of the second component 12.

The second fastening body 30 is firmly secured to the additional seat 12b by means of screws (Fig. 4a-4b), glues and interference fit or, preferably, ratchet fit (Figs. 2a-2b).

In particular, when screws or glues are used, the second fastening body 30 is secured to the second component 12 by screws **40** and, in particular, using self-threading screws, i.e. screws that, when they come into engagement with the second component 12, generate the thread by which the screws engage the second component 12 itself. Still more preferably, the second fastening body 30 is secured to the second component 12 using both self-threading screws 40 and a layer of glue interposed between the second element 12 and the second body 13.

Alternatively, in case of ratchet fit, the second fastening body 30 has, in the same manner as the first fastening body 20, additional tongues **32** protruding or jutting out of the outer surface **30c** of the second component defining an additional expansion vector **32a** having a component opposite to the secondary insertion direction 30b so that between the second fastening body 30 and the second component 12 a friction fit is defined that utilises a ratchet system. Alternatively, the second fastening body 30 and component 12 are of one piece construction, as shown in Figs. 3a and 3b.

As it clearly appears from the above, the invention advantageously and in an innovative manner, concerns a furniture element 10 preferably obtained using the jointing device 1 disclosed above and the assembling process hereinafter described.

The assembling process, adapted to be put into practice by the jointing device 1 described above in terms of structure, is the following.

First of all, the operator carries out a preparation step in which the two seats 11b and 12b are formed in the two components 11 and 12.

At the end of this step, the operator carries out a fastening step in which the first fastening body 20 is inserted into seat 11b and the second fastening body 30 is secured to the second component 12 and, in particular, is inserted in the seat 11b of the first component.

In detail, the second body 30 is connected to the second component 12 by ratchet fit utilising the additional tongues 32 or, alternatively, by threading M4; the first body 20 can be connected to the first component 11 by ratchet fit by means of the tongues or, alternatively, using screws 40 and/or glues.

In particular, when tongues 22 and 32 are used, the operator inserts the fastening bodies 20 and 30 into seats 11b and 12b causing the tongues 22 and 32 that come into contact with the edge of seats 11b and 12b, to elastically deform and bend, so that they are ratchet-fitted in seats 11 band 12b thus rigidly connecting components 11 and 12 with the corresponding fastening bodies 20 and 30.

When ratchet-fitting between the fastening bodies 20 and 30 has been completed, the operator has finished the fastening step and carries out a union step in which the second fastening body 30 is inserted into the housing cavity 21 so that components 11 and 12 are mutually constrained.

In particular, during the union step and, more particularly, at least during insertion, the second fastening body 30, due to the particular shape of insert 31 and of the housing cavity 21, causes elastic deformation, more specifically elastic expansion, of the first fastening body so that this first fastening body 20 is compressed and therefore clamped between the second fastening body 30 and the first component 11.

In conclusion, during this union step, the operator moves bodies 20 and 30 relative to each other along a direction substantially perpendicular to the constraint plane 10a so that insert 31 is introduced into cavity 21 and, therefore the two fastening bodies 20 and 30 are mutually constrained by friction fit making components 11 and 12 substantially firmly secured to each other.

This translation of insert 31 inside cavity 21, due to the different extensions of the engagement sections 31b and 31c and of sites 21b, causes the base portion 31c to elastically deform and, in detail, elastically expand a site 21b of the first body 20. Therefore, due to said elastic expansion, the first fastening body 20 and, in particular, site 21b exerts on the first section 31b a force that presses the first body 20 against the seat 11b and, simultaneously, the insert 31 against the cavity 21, so that the two bodies 11 and 12 are steadily mutually constrained.

In addition, introduction of insert 31 into the housing cavity 21, giving rise to expansion of the first fastening body 20, causes arising of a force further pressing tongues 22 against the seat 11b and therefore increasing the union force resulting from anchor fitting between tongues 22 and seats 11b.

The invention achieves important advantages.

A first advantage resides in the high speed and simplicity of the assembling process ensured by the jointing device 1.

In fact, due to the presence of tongues 22 and 32 and the particular coupling between cavity 21 and insert 31, a jointing device 1 is obtained in which no glues, screws, nails or other similar connecting means are used, which means made union of the components difficult and complicated.

This assembling simplicity and speed allows the furniture element 10 to be created in situ, i.e. in the place where the element itself is disposed.

Due to this aspect, components 11 and 12 are disassembled during transport so that they have reduced bulkiness and therefore involve lower transport costs as compared with the known furniture that necessarily had to be carried in an almost assembled condition.

Another advantage of the jointing device 1 therefore can be found in the possibility of manufacturing desks, bookshelves or other pieces of furniture and also door and window frames of high quality. This advantage is ensured by the absence of screws, glues or other similar connecting means enabling particularly precise assembling operations to be carried out that have no unaesthetical features and are therefore characterised by high aesthetic qualities.

A further advantage is represented by the simultaneous use of the anchor fit obtained by use of tongues 22 and the friction fit by elastic deformation obtained by introduction of insert 31 into the housing cavity 21.

In detail, the anchor fit enables the fastening bodies 20 and 30 to be connected to the respective components 11 and 12 in an almost unseparable manner, while the friction fit by elastic deformation enables a separable connection to be defined between the fastening bodies 20 and 30, so that one of components 11 and 12 can be replaced if replacement of one of them is required due to breaking for example.

Another important advantage is the high reliability and grip of the constraint between the components 11 and 12.

In particular, this advantage is achieved due to the particular tongues 22 and 32 defining a particularly strong and steady assembling as they adopt a friction fit utilising a ratchet system.

Reliability of the engagement between components 11 and 12 is further ensured by the particular constraint between the two fastening bodies 20 and 30. In particular, this advantage has been obtained due to the substantial parallelism of the constraint plane 10a with the preferred extension direction 30a of the second fastening body 30 and with the major extension direction 20a of the housing cavity 21.

This reliability is for example particularly important when a handle is fastened to a drawer or a door (Figs. 3a and 3b) where the forces applied for opening the drawer can cause detachment of the handle.

In fact, the parallelism between the aforesaid directions 20 and 30a and the constraint plane 10a and the perpendicularity between the force applied to the handle and said plane 10a allow the force itself to be distributed along the whole coupling extension between bodies 11 and 12 and therefore to be easily absorbed by the jointing device 1.

The engagement reliability is further ensured by the particular shape of the housing cavity 21 and insert 31.

In particular, the size and arrangement of the engagement sections 31b and 31c and the engagement sites 21b enable the two fastening bodies 20 and 30 to be mutually coupled by alternately engaging the tip portion 31b or the second section 31c with one of the expanded portions belonging to the insert 31. More particularly, due to this double possibility, if the second section 31c disengages from the expanded portions, constraint between the two bodies can still be maintained by virtue of the coupling between the tip portion 31b and the engagement site 21b.

In fact, if the two fastening bodies 20 and 30 are wished to be separated, the insert 31 that has to be disengaged from the housing cavity 21, tends to make the first fastening body 20 undergo expansion; this expansion, being the first fastening body 20 housed in the seat 11b, is inhibited by the first component 11 and, more specifically, by the resistance that the first component 11 raises against expansion of the first fastening body 20.

The invention is susceptible of variants falling within the scope of the inventive idea.

In particular, device 1 and, more specifically, the two fastening bodies 20 and 30 are of one piece construction and therefore have two distinct series of tongues 22 and 32 characterised by vectors having expansion extensions different from each other.

In this case, the jointing device 1 consists of a suitably shaped element in such a manner that it can be introduced into two seats, i.e. a seat 11b belonging to the first component 11 and an additional seat 12b belonging to the second component and has tongues 22, enabling it to carry out a ratchet fit with seat 11b due to the tongues 22 and to come into engagement with the additional seat 12b by means of an anchor fit obtained through the additional tongues 32.

All of the details can be replaced by equivalent elements and the materials, shapes and sizes can be of any nature and magnitude.

## Claims

1. A furniture element (10) comprising a first component (11); a second component (12); a jointing device (1) adapted to rigidly connect said first component (11) to said second component (12); said furniture element being **characterised in that** said first component (11) has a seat (11b); **in that** said jointing device (1) comprises a first fastening body (20) adapted to be inserted in said seat (11b) so as to be rigidly connected to said first component (11) and a second fastening body (30) adapted to be rigidly connected to said second component (12); and **in that** said first fastening body (20) has a housing cavity (21) and said second fastening body (30) is adapted to be fitted in said housing cavity (21) and to elastically deform said first fastening body (20) so that said first component (11) and said second component (12) are mutually firmly constrained.

2. A jointing device (1), in particular for furniture components of the type adapted to mutually connect a first component (11) having a seat (11b) suitable to at least partly house said jointing device (1), and a second component (12); said jointing device (1) comprising a first fastening body (20) adapted to be at least partly inserted in said seat (11b) thus defining an insertion direction (20b) and having an outer side surface (20c) adapted to face said seat (11b); a second fastening body (30) adapted to be connected to said second component (12); **characterised in that** one of said fastening bodies (20, 30) has a housing cavity (21) while the other of said fastening bodies (20, 30) comprises an insert (31) adapted to be fitted in said housing cavity (21); and **in that** said housing cavity (21) has a section having a first narrowing portion (21a) and two engagement sites (21b) separated by said first narrowing portion (21a) and wherein the section of said insert (31) has a second narrowing portion (31a) adapted to identify a tip portion (31b) and a base portion (31c).

3. A jointing device (1) as claimed in claim 2, wherein said narrowing portions (21a, 31a) have lengths different from each other.

4. A jointing device (1) as claimed in one or more of claims 2-3, wherein said tip portion (31b) has smaller sizes than said base portion (31c).

5. A jointing device (1) as claimed in one or more of claims 2-4, wherein said insert (31) is adapted to be fitted in said housing cavity (21) so as to elastically deform said housing cavity (21) and enable said fastening bodies (20, 30) and said components (11, 12) to be mutually constrained.

6. A jointing device (1) as claimed in one or more of claims 2-5, wherein said first fastening body (20) comprises tongues (22) protruding from said outer side surface (20c) in a manner adapted to define an expansion vector (22a) having a component opposite to said insertion direction (20b).

7. A jointing device (1) as claimed in one or more of claims 2-6, wherein said second component (12) has an additional seat (12b) adapted to house said second component (30) and to define a secondary insertion direction (30b); and wherein said second component (30) comprises additional tongues (32) protruding from the outer side surface (30c) of said second component (30) in a manner adapted to define an additional expansion vector (32a) having a component opposite to said secondary insertion direction (30b).

8. A jointing device (1) as claimed in one or more of claims 2-7, wherein said second component (30) has a thread suitable for engagement in said seat (11b).

9. A jointing device (1) as claimed in the preceding claim, wherein said thread is a thread M4.

10. A jointing device (1) as claimed in one or more of claims 2-9, wherein said components (11, 12) are adapted to substantially come into contact with each other defining a constraint plane (10a); wherein said housing cavity (21) and insert (31) respectively have a major extension direction (20a) and a preferred extension direction (30a) substantially parallel to said constraint plane (10a).

11. An assembling process for joining a first component (11) and a second component (12), **characterised in that** it comprises a fastening step in which a first fastening body (20) is inserted into a seat (11b) formed in said first component (11) and wherein a second fastening body (30) is connected to said second component (12); and a union step in which said second fastening body (30) is inserted in a housing cavity (21) formed in said first fastening body (20); and **in that** at least during this insertion said second fastening body (30) causes elastic deformation of said first fastening body (20) so as to compress said first fastening body (20) between said second fastening body (30) and first component (11).

12. An assembling process as claimed in the preceding claim, wherein said fastening bodies (20, 30) are connected to said components (11, 12) by friction fit of the ratchet type.

13. An assembling process as claimed in claim 11, wherein said second fastening body (30) is secured to said second component (12) by threading.

14. An assembling process as claimed in one or more of claims 11-13, wherein said first component (11) and second component (12) are joined defining a constraint plane (1a) and wherein said insertion takes place through mutual translation of said fastening bodies (20, 30) along a direction substantially perpendicular to said constraint plane (10a).
